# EUROPEAN PATENT APPLICATION

(11) **EP 4 424 487 A1**
(43) Date of publication of application: **04.09.2024**
(21) Application number: 23159833.5
(22) Date of filing: 03.03.2023
(51) Int. Cl.: B29B 17/02, B29K 105/26

(54) **METHOD FOR PREPARING A FRACTION OF SORTED PLASTIC WASTE AND RECYLING PLANT**

(71) Applicant: Borealis AG, 1020 Vienna (AT)
(72) Inventor: VOIGT, Björn, 44486 Stenungsund (SE); VANDERSPIKKEN, Jelle, 3583 Beringen (BE); SCHNEIDER, Horst, 2320 Schwechat (AT); KUUSISTO, Mika, 06101 Porvoo (FI); OLLIER, Nathalie, 1020 Vienna (AT); WYKOPAL, Petra, 2320 Schwechat (AT)
(74) Representative: TBK

(57) **Abstract**

A method for preparing a fraction of sorted plastic waste in at least one first container (10), and a recycling plant for carrying out the method are provided. The method comprises a step of pre-processing of multifractional plastic waste by sorting the plastic waste into at least a first fraction and a second fraction according to physical, chemical and/or optical properties of the plastic waste by a sorting unit. The method comprises a step of filling at least a part of the first fraction through an inlet (11) of a first container (10) by a first filling unit (112, 1111) at a container filling position, a step of mono-fractionally storing the part of the first fraction in the first container (10) at an intermediate storing position, and a step of mono-fractionally post-processing the part of the first fraction by at least one post-processing unit.

## Description

### Field

The present disclosure relates to a method for preparing a fraction of sorted plastic waste in at least one first container, and a recycling plant.

### Background

Recycling of plastic waste is generally known as the process of collecting plastic waste, processing it and using it as a raw material for making new plastic products.

By appropriately recycling the plastic waste, plastic pollution in the environment and greenhouse gas emissions can be significantly reduced. Thereby, the recycling of plastic waste makes an important contribution to environmental protection and reaching of climate targets.

A key component in the recycling of plastic waste is an effective mechanical recycling, that is, an effective preparation of the plastic waste. Generally, collected plastic waste includes multiple fractions of different colors (such as white, transparent etc.) and different polymer types (such as PE, PP etc.) all mixed together. To be able to make new high-quality plastic products thereof, the recycling of plastic waste includes a step of sorting of the plastic waste according to colors and/or polymer types into different fractions of plastic waste by a sorting unit. Then, after the sorting, the sorted fractions of plastic waste pure in type and/or color can be post-processed into plastic recyclates and further into new high-quality plastic products of a desired color and type.

While the sorting of the plastic waste into different fractions according to colors and polymer types is performed as a continuous process by the sorting unit, the post-processing such as washing, melting and extruding of the sorted fractions is typically performed campaign-wise, that is, in batches of a predetermined volume or weight. Accordingly, while the sorting unit continuously outputs plastic waste of different fractions, the post-processing is often performed in alternating campaigns of the different fractions. Besides, a sorting with only one fraction, that is, essentially purifying very pure feedstock or having a wide specification, is known.

To bridge the gap between the continuous sorting and the post-processing, it is therefore necessary to intermediately store the sorted fractions of plastic waste between these steps, and to supply each of the sorted fractions to the post-processing on demand.

Conventionally, as an intermediate storing, each sorted fraction of plastic waste is bundled and formed into bales of a predetermined size by using metal wires (baling wires) wound around the plastic waste. For example, WO 2017 / 207 610 A1 discloses the storing of plastic waste in the form of bales. The bales of plastic waste are stored in a recycling yard and transported to the post-processing on demand by a forklift, for example. At the post-processing, the metal wires are cut from the bales, such that the single plastic objects included in the bales can be supplied to the downstream washing lines and extruders.

However, the conventional storing of sorted fractions of plastic waste in bales comes with several disadvantages.

First, the metal wires used for holding the bales together are generally discarded as metal scrap after a single use or need to be separately recycled. Thereby the cost for the baling and the total cost of the recycling process are increased.

Second, the plastic pieces in the bales are exposed to their surroundings, such that odor and vermin (particularly if the material is not yet washed) is easily spread to the surroundings. Moreover, the exposed plastic pieces represent a significant fire hazard, and flames can easily spread between the bales stored in the recycling yard. Furthermore, rain water (e.g. if the bales are stored outdoors) and moisture can easily get in contact with the exposed plastic pieces in the bales such that leech water drained from the bales may contaminate the soil around the recycling yard.

Third, the handling of the bales is difficult and cumbersome, since the bales may release single plastic pieces (particularly small shredded pieces) or even rupture completely and release all of their content. Accordingly, the handling of the bales requires careful manipulation (particularly during transportation and stacking of the bales), which in itself poses occupational risks.

In addition, in a conventional recycling plant, the number of sorted fractions typically exceeds the number of post-processing units. Accordingly, in case the intermediate storing and supply of the sorted fractions to the post-processing units is unreliable and inefficient, the campaigns run in both washing and extruding with the same fraction need to be frequently interrupted, and the running time of the campaigns needs to be disadvantageously shortened. In this case, it becomes even more difficult to maintain a high and consistent quality of the new plastic products. Furthermore, an offspec volume of intermixed colors and/or polymer types (so-called cross-contamination) between the frequent changes and interruptions of the campaigns is disadvantageously increased such that the total efficiency of the recycling process is decreased.

Therefore, it is an object of the present disclosure to provide means for appropriately storing sorted fractions of plastic waste during the recycling process in a recycling plant.

### Summary

The above object is solved by a method for preparing a fraction of sorted plastic waste in at least one first container according to claim 1.

The method comprises a step of pre-processing of multi-fractional plastic waste by sorting the plastic waste into at least a first fraction and a second fraction according to physical, chemical and/or optical properties of the plastic waste by a sorting unit.

In the pre-processing step, the multi-fractional plastic waste, in which multiple fractions of plastics of different colors and/or different polymer types are mixed together, are sorted and separated into a least a first fraction and a second fraction by the sorting unit.

Each of the first fraction and the second fraction may be of a single polymer type and/or a single color within a predetermined range of purity. Particularly, besides the first fraction and the second fraction, the plastic waste may be sorted into an additional third fraction, a fourth fraction, or more fractions, depending on the diversity of the plastic waste that is input to the sorting unit and the desired number of fractions on the output side.

One fraction output by the sorting unit may be a rejected fraction that is not continued in the recycling process (e.g. foreign matter such as nonpolymers or polymer types that are not suitable for the further recycling process) and may be discarded, without being post-processed in the recycling plant.

Each of the at least first fraction and second fraction are correlated with specific physical, chemical or optical properties of the plastic waste or a set of specific physical, chemical or optical properties thereof, which are suitable to distinguish between the at least first fraction and second fraction.

The sorting unit is a device for sorting the plastic waste according to physical, chemical or optical properties of the plastic waste. Preferably, when the sorting unit identifies that a part of the plastic waste satisfies the physical, chemical and/or optical properties correlated to the first fraction, the sorting unit identifies the part of the plastic waste as a part of the first fraction and supplies it to the first filling unit.

Similarly, when the sorting unit identifies that a part of the plastic waste satisfies the physical, chemical and/or optical properties correlated to the second fraction, the sorting unit identifies the part of the plastic waste as a part of the second fraction and supplies it to a second filling unit different from the first filling unit.

In case the plastic waste is sorted into a third fraction, a fourth fraction, or more fractions, these fractions may each be supplied to a third filling unit, a fourth filling unit, or more filling units, respectively. The number of filling units may be the same as the number of fractions, into which the plastic waste is sorted by the sorting unit.

A physical property suitable for the sorting may be the specific density of plastic. In this case, the sorting unit may be a density separator.

An optical property suitable for the sorting may be the absorption coefficient of plastic. In this case, the sorting unit may be a sensor-based separator. The sorting unit may include a NIR (near infrared) sensor, which particularly sorts by material type and an optical sensor which separates according to color. Also, an object shape can be recorded and matched to a database of known packaging for improved sorting quality. The physical property could also be a size of a piece of plastic waste based on which the sorting is done by means of sieves etc. or can include magnetic properties (which is used to remove metals, for example).

The sorting unit may also use a combination of different sorting means. The sorting unit may also be supplemented by manual sorting by a worker.

Subsequent to the step of pre-processing follows a step of filling at least a part of the first fraction through an inlet of a first container by a first filling unit at a container filling position.

The step of filling does not have to follow directly after the step of pre-processing, and other steps may be performed therebetween.

Preferably, the first filling unit is a device for receiving the first fraction from the sorting unit and filling the first fraction through the inlet of the first container. The first filling unit may have a means for compaction of the first fraction into the container.

Furthermore the first filling unit may have a shred size reduction means for reducing a size of the pieces of the first fraction prior to the filling. The shred size reduction means may be a shredding device. Thereby, a utilization of space inside the first container can be increased. The shred size reduction means could also be a device for passing the material through a pair of heavy duty rollers to flatten each piece as much as possible.

The first container is a storage device for storing a part of the first fraction of a predetermined weight and/or volume. Thereby, the first container separates the part of the first fraction from the surroundings of the first container.

Thus, by using the first container as the storage device for storing the part of the first fraction, even small pieces of the first fraction (including shredded pieces of the first fraction) can be stored in the first container, without littering of pieces of the first fraction to the surroundings.

Moreover, by using the first container as the storage device for storing the part of the first fraction, the stored part of the first fraction is protected from the surroundings. Thereby, smell emissions from the plastic waste are greatly reduced, the fire hazard is minimized, and the risk of fire spreading between several containers is minimized.

Furthermore, by using the first container as the storage device for storing the part of the first fraction, the part of the first fraction is protected from rain and moisture, such that the storing can be done outdoors without the risk of leech water contaminating the soil. Similarly, the first container serves as a separation device for minimizing migration of e.g. biological activity or chemicals between different fractions.

In addition, by using the first container as the storage device for storing the part of the first fraction, the baling process can be eliminated and no metal wires for baling are required. Thereby, the possibility that impurities (i.e. remainders of metal wires) are present in the post-processing (e.g. washing) is significantly reduced, and the purity of the first fraction is increased.

The first container may be an airtight container, so as to hermetically seal the part of the first fraction from the surroundings of the first container. Thereby, the smell emissions from the plastic waste can be further reduced, and the fire hazard can be further reduced due to the lack of oxygen in the first container.

The inlet of the first container, through which the part of the first fraction is filled by the first filling unit, may be vertical or horizontal. Thereby, the first container can be filled with the part of the first fraction from the first filling unit by gravimetrically feeding, when the first container is placed at the container filling position. The first container may further include an inlet door for closing the inlet in an airtight manner so as to further reduce smell emissions and the fire hazard.

A plurality of first containers may be provided so as to increase the total buffer volume of the first fraction in the recycling plant. Thereby, depending on an amount of compaction of the plastic pieces, each first container can hold an equivalent amount of material to multiple bales, and manipulation needs for the plurality of first containers can be reduced. Preferably, each of the plurality of first containers has the same capacity. The first container may be configured in a stackable manner. Thereby, the first fraction can be stored in a plurality of first containers in a space efficient way, and the footprint is reduced. Moreover, since each first container protects the first fraction, separating fire walls or fire safety distance between a plurality of first containers can be eliminated even in a stacked state.

The first container may be compatible with DIN 30722 (relating to roller containers), so as to be suitable for truck hauling to other locations.

The first container may be a press container, particularly a commercially available press container.

Subsequent to the step of filling follows a step of mono-fractionally storing the part of the first fraction in the first container at the intermediate storing position.

The mono-fractionally storing does not have to follow directly after the step of filling, and other steps may be performed therebetween.

The term "mono-fractionally storing the part of the first fraction" indicates that the part of the first fraction is stored without parts of the second fraction or other fractions intermixed therebetween, so as to be within a predetermined range of purity.

The first container is stored at the intermediate storing position. The intermediate storing position is a place where the first container is intermediately stored for any period of time, before continuing with the post-processing.

The intermediate storing position is different from the container filling position. This enables another first container to be filled at the container filling position, while one first container is stored at the intermediate storing position.

The intermediate storing position may be a part of a container yard of the recycling plant, and may be adjacent to the first filling unit. Multiple intermediate storing positions may be provided in the recycling plant.

In a step of mono-fractionally post-processing, the part of the first fraction is mono-fractionally post-processed by at least one post-processing unit.

Preferably, the method further comprises a step of compacting the part of the first fraction by a processing mechanism of the first container or the first filling unit after the filling.

Accordingly, the first container or the first filling unit includes the processing mechanism, which compresses the part of the first fraction (i.e. reduces a volume of the part of the first fraction). Thereby, the utilization of storing space in the first container is improved. The processing mechanism may be a hydraulic press or an electromechanical press or a screw press.

Preferably, the method further comprises a step of filling another part of the first fraction through the inlet of the first container by the first filling unit after the compacting.

Accordingly, the filling process of the container can be made a continuous multi-stage process, by adding the other part of the first fraction to the one part of the first fraction that has already been filled and compacted in the first container. Thereby, a further increased utilization of storage space in the first container is achieved.

The filling of another part of the first fraction does not have to follow directly after the compacting of the part of the first fraction, and other steps may be performed therebetween.

Particularly, the filling of another part may be performed after the mono-fractionally storing of the part at the intermediate storing position. Accordingly, the storing at the intermediate storing position can be timely interrupted by filling the another part of the first fraction into the first container. Thereby, the intermediate storing in the first container can be flexibly adapted to an output of the sorting unit and the post-processing in the at least one post-processing unit.

Preferably, each first container is filled exclusively with the first fraction by the first filling unit.

Accordingly, each first container is exclusively designated to the first fraction. Thereby, remainders of plastic waste, which may adhere to an inside of the first container, are from the same fraction, and cross-contamination between different fractions in the recycling process is prevented.

The first container may be provided with an identifying mark or electronic identification information (e.g. an RFID tag) that corresponds to the first fraction, and makes the first container easily identifiable for automatic processing in the recycling plant.

Preferably, the method further comprises a step of discharging at least a portion of the part of the first fraction through an outlet of the at least one of the first containers by a first discharging unit after the storing and before the post-processing. The first fraction discharged from the at least one of the first containers by the first discharging unit may be mono-fractionally post-processed by the at least one post-processing unit after the discharging.

The discharging may be subsequent to the mono-fractionally storing at the intermediate storing position. However, the discharging does not have to follow directly after the mono-fractionally storing, and other steps such as the filling of another part may be performed therebetween.

The first discharging unit may be a device for discharging and receiving the part of the first fraction from the first container. The first discharging unit may represent an interface between the intermediate storing and the post-processing. Accordingly, the post-processing can be supplied on demand with the first fraction discharged from the at least one first container so as to enable an efficient campaign-wise operation of the at least one post-processing unit.

The first container may include the outlet, through which a portion of the part of the first fraction or the whole part of the first fraction can be discharged from the first container to the discharging unit. The outlet of the container may be different from the inlet. The outlet of the first container may face downwards, so as to discharge the portion of the part of the first fraction or the whole part of the first fraction gravimetrically. The first container may include an outlet door for closing the outlet in an airtight manner. Preferably, both the inlet door and the outlet door can be closed in an airtight manner for ensuring the reduction of smell emissions and the fire hazard. In another configuration, the outlet may be the same as the inlet, or the inlet and the outlet may at least partially overlap. Preferably, the inlet is smaller than the outlet, and the inlet is located in the outlet door.

Preferably, the step of mono-fractionally post-processing by the at least one post-processing unit includes a step of cleaning the first fraction by a plastic waste cleaning unit and/or a step of thermally processing the first fraction by a heat-processing unit.

The plastic waste cleaning unit is a device for cleaning plastic waste. The plastic waste cleaning unit may be a washing device. The plastic waste cleaning unit may use cold water and/or hot water and chemicals for the cleaning of the plastic waste. The heat-processing unit is a device for thermally processing plastic, particularly above the melting temperature of the plastic. The heat-processing unit may be an extruder (extrusion molding device).

Accordingly, the cleaning of the first fraction by the plastic waste cleaning unit and/or the thermally processing of the first fraction by the heat-processing unit can be supplied on demand with the first fraction discharged from the at least one first container so as to enable an efficient, optionally campaign-wise, operation in the at least one post-processing unit.

Alternatively, the step of mono-fractionally post-processing by the at least one post-processing unit may comprise a step of chemical or solvent based recycling. A chemical recycling or so called feedstock recycling process, usually comprises solvolysis and thermochemical processing. Chemical recycling technologies can break down plastics into its building blocks and transform them into valuable secondary raw materials. This provides a promising opportunity to recover pre-sorted and pre-treated solid plastic waste to obtain feedstocks for the petrochemical industry, which may be processed to plastics again, as well as to chemical commodities and fuels.

In a solvent based Recycling process (SbR) the polymer is initially dissolved in an appropriate solvent and next either the solubility of the dissolved polymer is decreased by the addition of a non-solvent (dissolution/precipitation) and/or solidification of the polymer is caused by the preferably complete separation of the solvent from the solidified polymer by thermal unit operations (evaporation, drying etc.). Commonly known waste plastics material solvent based recycling processes may include the removal of impurities, dissolution, and reprecipitation/recrystallization and/or devolatilization of the polymer. Specifically, the one or more polymer is dissolved in one or more solvent, and subsequently, each polymer is selectively precipitated/crystallized. Ideally, if a solvent can dissolve either the target polymer or all the other polymers except the target polymer, it can be used for selective dissolution.

Preferably, the method further comprises a step of filling at least a part of the second fraction through an inlet of a second container by a second filling unit, and mono-fractionally storing the part of the second fraction in the second container.

The filling of at least a part of the second fraction into the second container may be performed at the same time as the filling of at least a part of the first fraction into the first container. The first filling unit and the second filling unit may be operated independently from each other.

The second filling unit may be a device for receiving the second fraction from the sorting unit and filling the second fraction through the inlet of the second container. The second filling unit may have a configuration similar to the configuration of the first filling unit.

The second container is a storage device for storing a part of the second fraction of a predetermined weight and/or volume. The second container may have the same configuration as the first container, thereby achieving the same technical effects.

In addition, each second container may be filled exclusively with the second fraction by the second filling unit, thereby achieving the same technical effects as in the case of filling the first container exclusively with the first fraction.

In case an additional third fraction, fourth fraction, or more fractions are present, a third container, a fourth container, or more containers and pluralities thereof may be provided and used similarly to the first container and the second container.

Preferably, the method further comprises a step of discharging at least a portion of the part of the second fraction through an outlet of the second container by the first discharging unit after the storing, and a step of mono-fractionally post-processing the second fraction discharged from the at least one of the second containers by the same or a different post-processing unit after the discharging.

The discharging may be subsequent to the mono-fractionally storing at the intermediate storing position. However, the discharging does not have to follow directly after the mono-fractionally storing, and other steps such as the filling of another part may be performed therebetween.

Accordingly, the first discharging unit can be used to discharge not only the first fraction from the first container, but also the second fraction from the second container. Thereby, particularly in the case of more than two fractions, the total number of discharging units can be lower than the total number of filling units.

Moreover, mono-fractionally post-processing the second fraction discharged from the at least one of the second containers by the same or a different post-processing unit (i.e. not the same post-processing unit, in which the first fraction is processed) provides an increased flexibility in using the post-processing units, such that advantageous long campaigns can be run in each post-processing unit. Thereby, the total efficiency of the recycling process can be increased.

Preferably, the post-processing by the one or more post-processing units is operated campaign-wise by switching between a first campaign of post-processing the first fraction and a second campaign of post-processing the second fraction by the post-processing unit.

Accordingly, the same post-processing unit can be used for the post-processing of the first fraction and the post-processing of the second fraction. Thus, the total number of post-processing units can be lower than the total number of fractions. Thereby, a configuration of the recycling plant can be simplified.

Specifically, a campaign size of the first campaign and/or the second campaign may be 100 ton or more, preferably 200 ton or more, and more preferably 300 ton or more.

Preferably, the step of discharging includes a step of tilting the first container around a horizontal axis by a container tilting mechanism and a step of unlocking an outlet door of the first container by a locking/unlocking mechanism to discharge the first fraction through the outlet of the first container.

Accordingly, by using a container having a configuration, in which the outlet faces to a lateral side of the container (that is, a side of the container other than an upper or lower side, preferably the short or back end of the container), as the first container can be efficiently discharged by tilting the container. This enables the use of conventional containers, such as conventional press containers having the outlet located on their lateral side.

Preferably, the step of tilting includes applying an acceleration/retardation-sequence to the container by a vibration mechanism or the like. Thereby, the emptying of the container can be facilitated, especially in the case where the plastic is sticking to an inside of the container walls due to heavy compacting or the like. In a specific configuration, the container tilting mechanism may be configured to drop the container by a certain height in the vertical direction or to put the container on a rollercoaster rail curved downwards coming to a sudden stop, thereby rapidly decelerating the container so as to facilitate the emptying of the container.

Preferably, the method further comprises a step of detecting flammable gases formed in the first container by a gas detector before the discharging. Thereby, the fire hazard can be further reduced.

Preferably, the method further comprises a step of injecting a fire-retardant fluid to the first container before the discharging. Thereby, the fire hazard can be further reduced.

Preferably, the method further comprises a step of cleaning an inside of the first container by a spray nozzle after the discharging. The cleaning is a hygienic measure to improve quality by reducing biological activity and odor. This step could also include an application of a corrosion protection (plastic waste is generally slightly acidic and often contains some moisture). Water may be used to clean the inside of the first container. Thereby, a cross-contamination between the different fractions and containers can be further reduced, particularly in a case where the containers are reused for a different fraction. In the case, where the containers are reused for a different fraction, the method may further comprise a step of filling at least a part of a fraction other than the first fraction through the inlet of the first container.

Preferably, each of the at least one post-processing includes hot-washing and/or flake purification of the plastic waste and/or compounding and/or deodorizing the plastic waste. Accordingly, the purity of each fraction of post-processed plastic waste can be further increased. Thereby, a high and consistent quality of new plastic products can be ensured, while deficient plastic products of intermixed colors and/or polymer types are prevented (i.e., an offspec volume is minimized).

Preferably, the method further comprises a step of combining the part of the first fraction discharged through the outlet of the first container by the first discharging unit with another part of the first fraction supplied from the sorting unit and having bypassed the first filling unit and the first discharging unit.

Accordingly, a shortcut between the sorting unit and the first discharging unit can be provided, so as to enable a direct supply of the first fraction from the continuously-operated sorting unit to the discharging unit. Thereby, a campaign size can be increased alternatively, less intermediate storage volume needs to be utilized by a direct supply of the first fraction from the sorting unit.

Preferably, the method further comprises, after the step of filling the first container, a step of automatically moving the first container from the container filling position to a filled container waiting position, a step of automatically moving another first container to the container filling position, and a step of moving the first container between the filled container waiting position and the intermediate storing position by an overhead crane.

The overhead crane may be a moving mechanism for moving the first container and the second container between the container filling positions, the intermediate storing positions, and discharging positions at the discharging unit. The overhead crane may be automatically controlled so as to automate the handling of the first container and the second container. In the case of using a third container, a fourth container, or more containers, the overhead crane may be the moving mechanism for moving also these containers.

The filled container waiting position is a position different from the container filling position. Accordingly, the filled first container can be automatically moved to the filled container waiting position, and the overhead crane can move the other first container (an empty or at least partially empty first container) to the container filling position, so as to continue the filling from the first filling unit.

The overhead crane further moves the filled first container from the filled container waiting position to the intermediate storing position. Thus, the filling from the first filling unit can be continued, while an amount of manipulating by the overhead crane is reduced. Thereby, the continuously-operated sorting unit does not have to be stopped, when the first container at the container filling position is full.

The filled container waiting position may be adjacent to the container filling position. Thereby, the amount of manipulating by the overhead crane is further reduced. However, it is not essential that the moving of the filled first container from the container filling position to the filled container waiting position is performed by the overhead crane. From the above movements, only the moving of the filled first container to the intermediate storing position and the moving of an empty first container to the container filling position may be performed by the overhead crane, and the moving of the filled first container from the container filling position to the filled container waiting position may be performed by other means for moving (different from the overhead crane).

Preferably, the method further comprises, after the step of filling the first container, a step of automatically moving the first container from the container filling position to the intermediate storing position by an overhead crane while buffering the first fraction supplied from the sorting unit in a chute of the first filling unit, and automatically moving another first container to the container filling position.

Accordingly, by buffering the first fraction supplied from the sorting unit in a chute of the first filling unit, the first filling unit can continuously be supplied with the first fraction from the sorting unit. Thereby, the continuously-operated sorting unit does not have to be stopped, when the first container at the container filling position is full and exchanged with another first container. For example, the crane can do the replacement by moving the full container directly to the intermediate storage and then bringing an empty container back to the filling unit (to the container filling position). With a large enough buffer volume of the chute, the crane has sufficient time to do the container replacement.

The above object is further solved by a recycling plant according to claim 15.

The recycling plant comprises a pre-processing section including a sorting unit for sorting multi-fractional plastic waste into at least a first fraction and a second fraction according to physical, chemical or optical properties of the plastic waste, and a first filling unit for filling at least a part of the first fraction into at least one first container at a container filling position. The recycling plant further comprises a storing section including an intermediate storing position for intermediately storing the first container. The recycling plant further comprises a post-processing section including at least one post-processing unit for mono-fractionally post-processing the part of the first fraction. The recycling plant is configured to carry out the method specified above.

The present disclosure further relates to a use of a first container including an inlet, a storage space for storing a first fraction of sorted plastic waste, and an outlet, in the method specified above.

The present disclosure further relates to a recycling plant. The recycling plant may be used to carry out the method specified above, but the recycling plant may also be used to carry out other methods different from the method specified above.

The recycling plant may further comprise the first container, wherein the first container includes an inlet, a storage space for storing the part of the first fraction, and an outlet.

Preferably, in the recycling plant, the storing section further includes a moving mechanism for moving the first container between the container filling position and the intermediate storing position.

Preferably, in the recycling plant, the moving mechanism is an overhead crane.

The recycling plant may further comprise a control unit configured to control the moving mechanism to move the first container between the container filling position, the intermediate storing position, and the container discharging position.

Each of the at least one post-processing unit may include a first discharging unit for discharging at least a portion of the part of the first fraction from the first container at a container discharging position, and/or a heat-processing unit for thermally processing the first fraction.

Preferably, in the recycling plant, each of the at least one post-processing unit further includes a plastic waste cleaning unit located on a downstream side of the first discharging unit and configured to clean the plastic waste by washing.

Preferably, after the washing step, a thermal processing step is performed yielding recycled granulates.

Alternatively, the at least one post-processing unit may comprise a chemical recycling unit or a solvent based recycling unit, which is configured to perform the chemical recycling process (feedstock recycling process) or the solvent based recycling process (SbR), respectively.

Preferably, in the recycling plant, the control unit is further configured to control a filling operation by the first filling unit so as to activate the filling operation when the first container is moved to the container filling position, and the control unit is further configured to control a discharging operation by the first discharging unit so as to activate the discharging operation when the first container is moved to the container discharging position.

Preferably, in the recycling plant, the first discharging unit includes a container tilting mechanism configured to tilt the first container at the container discharging position around a horizontal axis to discharge the first fraction from the first container.

Preferably, in the recycling plant, the first discharging unit is located at an elevated position so as to supply the first fraction to a downstream side of the post-processing section gravimetrically.

Preferably, in the recycling plant, the post-processing section further includes a second discharging unit for discharging the plastic waste from the first, second or other container placed at a second container discharging position. In this case, a container may be re-sorted (e.g. a colored mix could be split up into separate colors) by emptying it not to the post-processing but back to the sorting stage. Further, in this case, there may be one discharging unit (emptying station) for multiple post-processing units. In another configuration, two discharging units may be used for the same fraction.

Preferably, in the recycling plant, the first discharging unit includes a gas detector for detecting flammable gases formed in the first container.

Preferably, in the recycling plant, the first discharging unit includes a flushing device for injecting a fire-retardant fluid to the first container.

Preferably, in the recycling plant, the first discharging unit includes a container cleaning means for cleaning an inside of the first container by a spray nozzle.

Preferably, in the recycling plant, the pre-processing section further includes a second filling unit for filling a part of the second fraction into a second container placed at a second container filling position.

Preferably, in the recycling plant, the first filling unit includes a first shred size reduction means for reducing the size of the first fraction of sorted plastic waste supplied from the sorting unit, and the second filling unit includes a second shred size reduction means for reducing the size of the second fraction of sorted plastic waste supplied from the sorting unit.

### Brief description of drawings

The aspects of the disclosure may be best understood from the following detailed description taken in conjunction with the accompanying figures. The figures are schematic and simplified for clarity, and they just show details to improve the understanding of the claims, while other details are left out. The individual features of each aspect may each be combined with any or all features of the other aspects. These and other aspects, features and/or technical effect will be apparent from and elucidated with reference to the illustrations described hereinafter, in which:
Fig. 1 is a schematic view of a recycling plant according to an embodiment;
Fig. 2 is a flowchart illustrating a method for preparing a fraction of sorted plastic waste according to the embodiment;
Fig. 3 is a side view of a container suitable to be used as a first container in the method according to the embodiment;
Fig. 4 is a perspective view of the recycling plant according to a modification of the embodiment;
Figs. 5A - 5J are schematic views illustrating a handling procedure of the first container; and
Fig. 6 is a flowchart illustrating a modified method for preparing a fraction of sorted plastic waste according to the modification of the embodiment.

### Detailed description

The detailed description set forth below in connection with the appended drawings is intended as a description of various configurations. The detailed description includes specific details for the purpose of providing a thorough understanding of various concepts. However, it will be apparent to those skilled in the art that these concepts may be practised without these specific details.

### Recycling plant

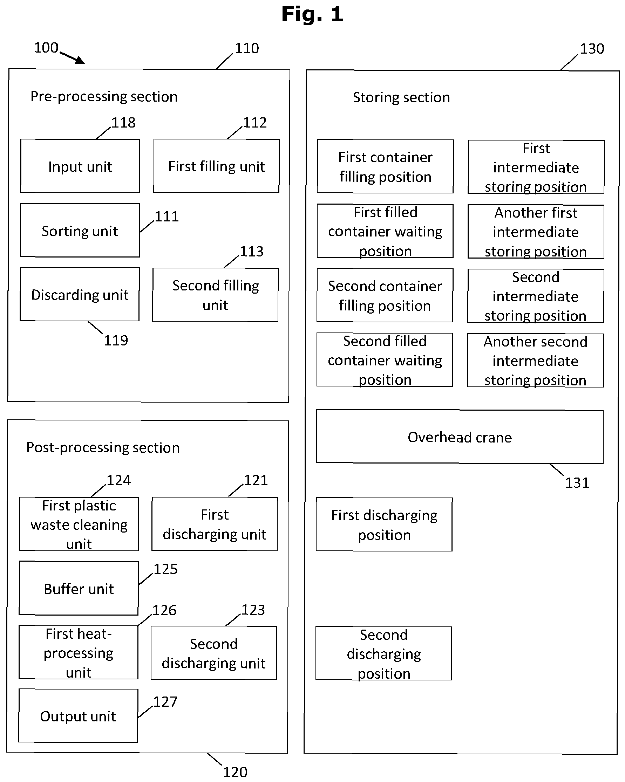

First, a basic structure of a recycling plant 100 will be described with reference to Fig. 1. Fig. 1 is a schematic view of a recycling plant 100 according to an embodiment of the present invention.

As shown in Fig. 1, the recycling plant 100 comprises a pre-processing section 110, a storing section 130, and a post-processing section 120.

### Pre-processing section

In the pre-processing section 110, plastic waste is prepared to be stored in the storing section 130.

The pre-processing section 110 comprises an input unit 118, a sorting unit 111, a discarding unit 119, a first filling unit 112 and a second filling unit 113.

The input unit 118 is configured to receive multi-fractional plastic waste, in which multiple fractions of plastics of different colors (such as white, transparent etc.) and/or different polymer types (such as PE, PP etc.) are mixed together, from an outside of the recycling plant 100.

The input unit 118 is connected to the sorting unit 111 so as to be capable of supplying multi-fractional plastic waste received from the outside of the recycling plant 100 to the sorting unit 111.

The sorting unit 111 is a device for sorting the plastic waste according to physical, chemical or optical properties of the plastic waste.

In the present embodiment, the sorting unit 111 sorts the plastic waste into a first fraction, a second fraction, and a rejected fraction. In the present embodiment, the first fraction is white polyethylene (PE), the second fraction is transparent polyethylene (PE), and the rejected fraction is the remainder of the plastic waste (i.e. coloured plastic waste) supplied to the sorting unit 111 such as other polymers and impurities.

Each of the first fraction and second fraction are correlated with specific physical, chemical or optical properties of the plastic waste or a set of specific physical, chemical or optical properties thereof, which are suitable to distinguish between the first fraction and the second fraction.

The sorting unit 111 comprises identifying means for identifying a piece of the waste supplied from the input unit 118 according to the physical, chemical or optical properties of the plastic waste.

The sorting unit 111 is connected to the first filling unit 112, the second filling unit 113, and the discarding unit 119 so as to be capable of supplying the first fraction, the second fraction, and the rejected fraction to the first filling unit 112, the second filling unit 113, and the discarding unit 119, respectively.

When the sorting unit 111 identifies that a piece of the waste satisfies the physical, chemical and/or optical properties correlated to the first fraction, the sorting unit 111 identifies the piece of the plastic waste as a piece of the first fraction and supplies it to the first filling unit 112.

Similarly, when the sorting unit 111 identifies that a piece of the waste satisfies the physical, chemical and/or optical properties correlated to the second fraction, the sorting unit 111 identifies the piece of the plastic waste as a piece of the second fraction and supplies it to the second filling unit 113.

When the sorting unit 111 identifies that a piece does not satisfy the physical, chemical and/or optical properties correlated to the first fraction or the second fraction, the sorting unit 111 identifies the piece as a piece of the rejected fraction and supplies it to the discarding unit 119.

The first filling unit 112 is a device for receiving the first fraction from the sorting unit 111 and filling the first fraction into a first container 10 that is placed at a first container filling position. The first filling unit 112 and the first container filling position constitute an interface between the pre-processing section 110 and the storing section 130.

Similarly, the second filling unit 113 is a device for receiving the second fraction from the sorting unit 111 and filling the second fraction into a second container 20 that is placed at a second container filling position. The second filling unit 113 and the second container filling position constitute an interface between the pre-processing section 110 and the storing section 130.

### Intermediate storing section

In the storing section 130, pre-processed plastic waste is stored, before being supplied to the post-processing section 120.

As shown in Fig. 1, the storing section 130 comprises the first container filling position and the second container filling position.

The first container filling position and the second container filling position are arranged adjacent to the first filling unit 112 and the second filling unit 113 of the pre-processing section 110, respectively.

The first container 10 is a storage device for storing a part of the first fraction of a predetermined weight and/or volume.

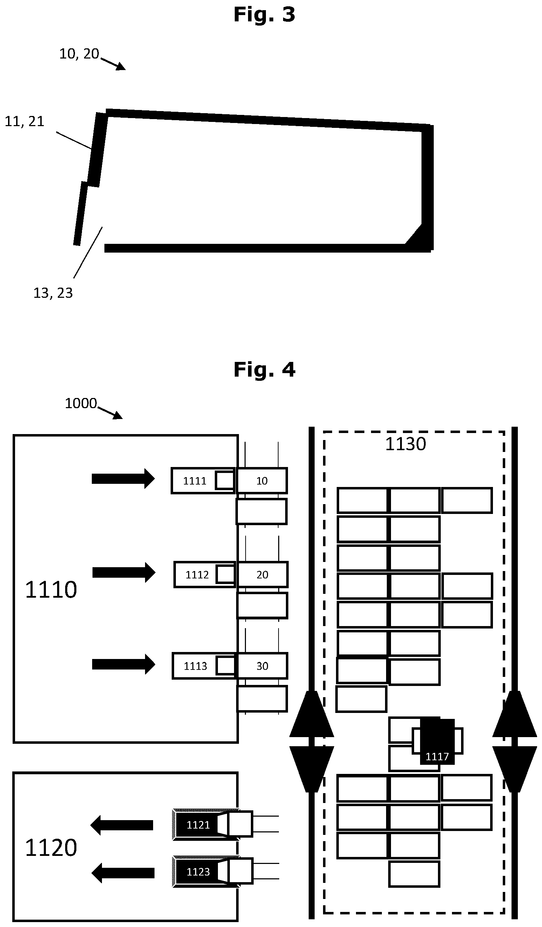

Fig. 3 is a side view of a press container suitable to be used as the first container 10 and the second container 20.

As shown in Fig. 3, the container 10, 20 has an inlet 11, 21 and an outlet 13, 23. The container 10, 20 may have a hydraulic press (processing mechanism; not shown).

In the present embodiment, the container 10, 20 is a commercially available press container, as specified by one of DE 20 2009 011 722 U1, DE 10 2013 103 610 A1, or EP 3 750 702 A1, for example.

As shown in Fig. 1, the storing section 130 further comprises a first intermediate storing position, a second intermediate storing position, and an overhead crane 131.

The first intermediate storing position is a place where the first container 10 can be intermediately stored for any period of time, before continuing with the post-processing. In the present embodiment, the first intermediate storing position is a part of a container yard of the recycling plant 100.

Similarly, the second intermediate storing position is a place where the second container 20 can be intermediately stored for any period of time, before continuing with the post-processing. In the present embodiment, the second intermediate storing position is a part of a container yard of the recycling plant 100.

The storing section 130 further comprises another first intermediate storing position and another second intermediate storing position where the first container 10 and the second container 20 can alternatively be intermediately stored, respectively. Moreover, another first container 10 and another second container 20 can be intermediately stored at the another first intermediate storing position and the another second intermediate storing position, respectively.

As shown in Fig. 1, the storing section 130 further comprises a first filled container waiting position and a second filled container waiting position. The first filled container waiting position and the second filled container waiting position are arranged adjacent to the first container filling position and the second container filling position, respectively.

When the first container 10 and the second container 20 are filled with a predetermined amount of plastic waste, the first container 10 and the second container 20 can be moved from the first container filling position and the second container filling position to the first filled container waiting position and the second filled container waiting position, respectively. In the present embodiment, the movement is performed automatically by a container moving mechanism.

As shown in Fig. 1, the storing section 130 further comprises a first discharging position and a second discharging position.

The first discharging position and the second discharging position are arranged adjacent to a first discharging unit 121 and a second discharging unit 123 of the post-processing section 120, respectively.

The first discharging position and the first discharging unit 121 constitute an interface between the storing section 130 and the post-processing section 120. Similarly, the second discharging position and the second discharging unit 123 constitute an interface between the storing section 130 and the post-processing section 120.

When the first container 10 is placed at the first discharging position, the part of the first fraction stored in the first container 10 can be discharged to the first discharging unit 121. The first container 10 can also be placed at the second discharging position so as to discharge the part of the first fraction stored in the first container 10 to the second discharging unit 123.

Similarly, when the second container 20 is placed at the first discharging position, the part of the second fraction stored in the second container 20 can be discharged to the first discharging unit 121. The second container 20 can also be placed at the second discharging position so as to discharge the part of the second fraction stored in the second container 20 to the second discharging unit 123.

The first container 10 and the second container 20 are moved by the overhead crane 131. The overhead crane 131 is a moving mechanism for moving the first container 10 and the second container 20 between the first container filling position, the second container filling position, the first intermediate storing position, the second intermediate storing position, the another first intermediate storing position, and the another second intermediate storing position. In other words, the overhead crane 131 has an operational reach over the entire storing section 130.

In the present embodiment, the overhead crane 131 is controlled by a control unit controlling the handling of the first container 10 and the second container 20 at the intermediate storing section 130, and preferably recording a position and content of each container 10, 20.

In the present embodiment, the overhead crane 131 is an electric overhead crane electrically driven by an electric motor.

When the first fraction and the second fraction are transferred from the intermediate storing section 130 to the post-processing section 120, the intermediate storing is completed.

### Post-processing section

In the post-processing section 120, the first fraction and the second fraction are processed into recycled plastic material that can be further processed into new plastic products.

As shown in Fig. 1, the post-processing section 120 comprises the first discharging unit 121, the second discharging unit 123, a first plastic waste cleaning unit 124, a buffer unit 125, a first heat-processing unit 126, and an output unit 127.

In the present embodiment, the recycling plant 100 further comprises a first bypass (not shown) and a second bypass (not shown). The first bypass directly connects the sorting unit 111 and the first plastic waste cleaning unit 124 so as to be capable of directly supplying the first fraction from the sorting unit 111 to the first plastic waste cleaning unit 124, while bypassing the storing section 130, particularly the first filling unit 112. Similarly, the second bypass directly connects the sorting unit 111 and the first plastic waste cleaning unit 124 so as to be capable of directly supplying the second fraction from the sorting unit 111 to the first plastic waste cleaning unit 124, while bypassing the storing section 130, particularly the second filling unit 113.

The first plastic waste cleaning unit 124 is a device for cleaning plastic waste. In the present embodiment, the first plastic waste cleaning unit 124 is a washing unit configured to wash plastic waste by using water.

The first plastic waste cleaning unit 124 is connected to the first heat-processing unit 126 so as to be capable of supplying the first fraction and/or the second fraction received from the first discharging unit 121 and/or the second discharging unit 123 towards the first heat-processing unit 126.

In the present embodiment, the buffer unit 125 is interposed between the first plastic waste cleaning unit 124 and the first heat-processing unit 126 so as to be capable of intermediately storing the cleaned first fraction and/or the cleaned second fraction before the heat-processing.

The first heat-processing unit 126 is a device for thermally processing plastic, particularly above the melting temperature of the plastic. In the present embodiment, the first heat-processing unit 126 is an extruder (extrusion molding device). The first heat-processing unit 126 is configured to melt the first fraction and/or the second fraction of plastic waste and to form new plastic products thereof.

The first heat-processing unit 126 is connected to the output unit 127 so as to be capable of supplying the recycled plastic material formed from the first fraction and/or the second fraction of plastic waste to the output unit 127.

The output unit 127 is configured to supply the recycled plastic material received from the first heat-processing unit 126 to the outside of the recycling plant 100.

When the recycled plastic material is transferred from the post-processing section 120 to the outside of the recycling plant 100, the post-processing is completed.

### Method for preparing a fraction of sorted plastic waste

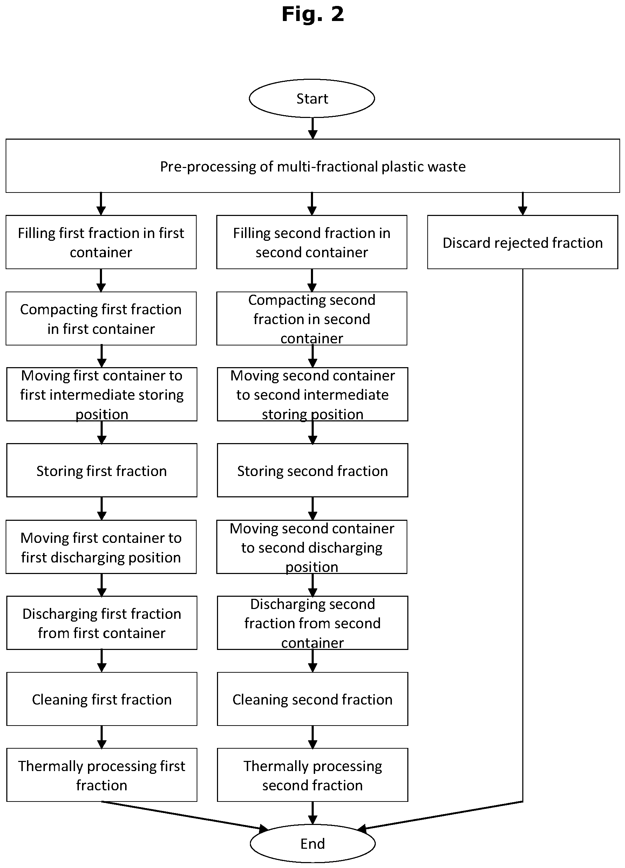

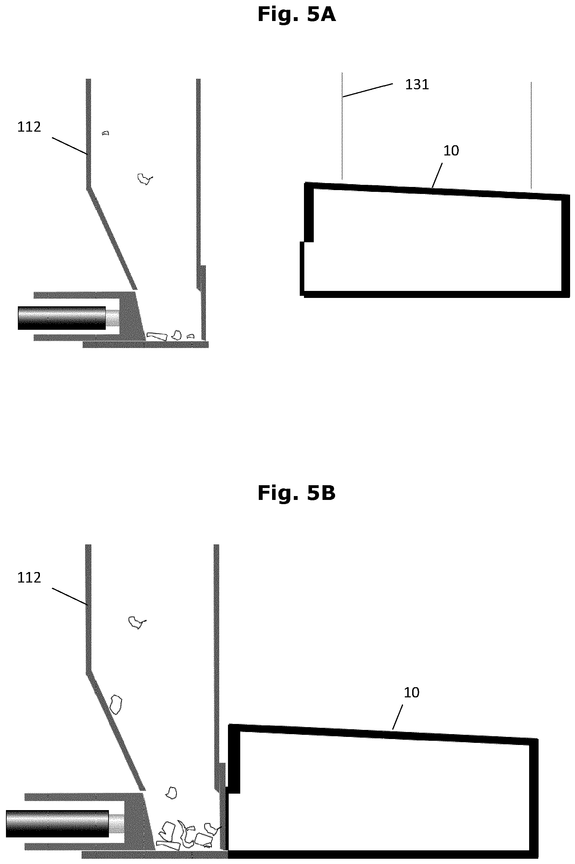

A method for preparing a fraction of sorted plastic waste will be explained with reference to Fig. 2. Additional reference will be made to Figs. 5A - 5J.

Fig. 2 is a flowchart illustrating the method for preparing a fraction of sorted plastic waste.

As shown in Fig. 2, the method comprises a step of pre-processing of multi-fractional plastic waste by sorting the plastic waste into a first fraction, a second fraction, and a rejected fraction by the sorting unit 111.

Subsequently, the method comprises a step of filling at least a part of the first fraction in a first container 10 by the first filling unit 112, and a step of compacting the part of the first fraction.

In more detail, as shown in Fig. 5A, the first container 10 is moved towards the first filling unit 112 by the overhead crane 131. As shown in Fig. 5B, first container 10 docks to a press of the first filling unit 112 (at the container filling position).

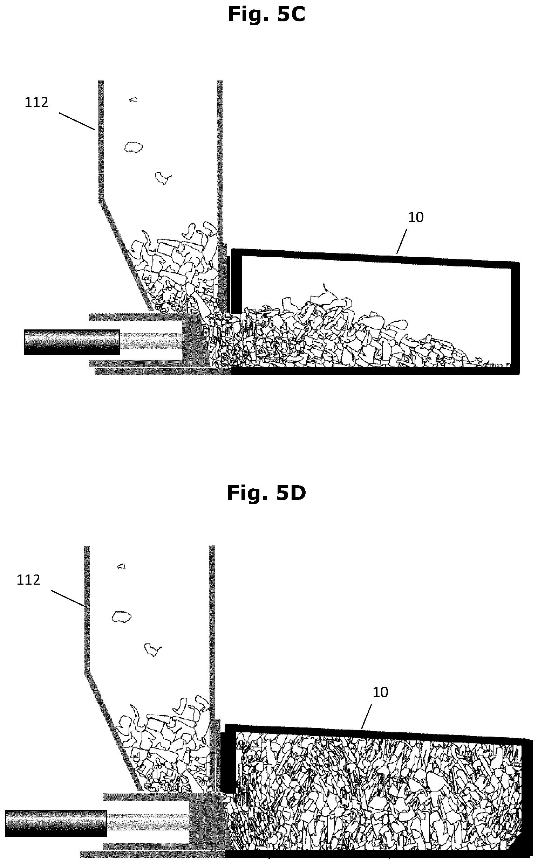

As shown in Fig. 5C, pieces of the first fraction fall down inside the chute of the first filling unit 112 towards the press of the first filling unit 112. Then, the inlet door of the first container 10 is opened, and a door of the first filling unit 112 is opened, such that a communication between an inside of the first filling unit 112 and an inside of the first container 10 is established. In this state, the press supplies the pieces of the first fraction from the chute through the inlet 11 of the first container 10 by moving towards the inlet 11 of the first container 10 and retracting therefrom in a reciprocating motion.

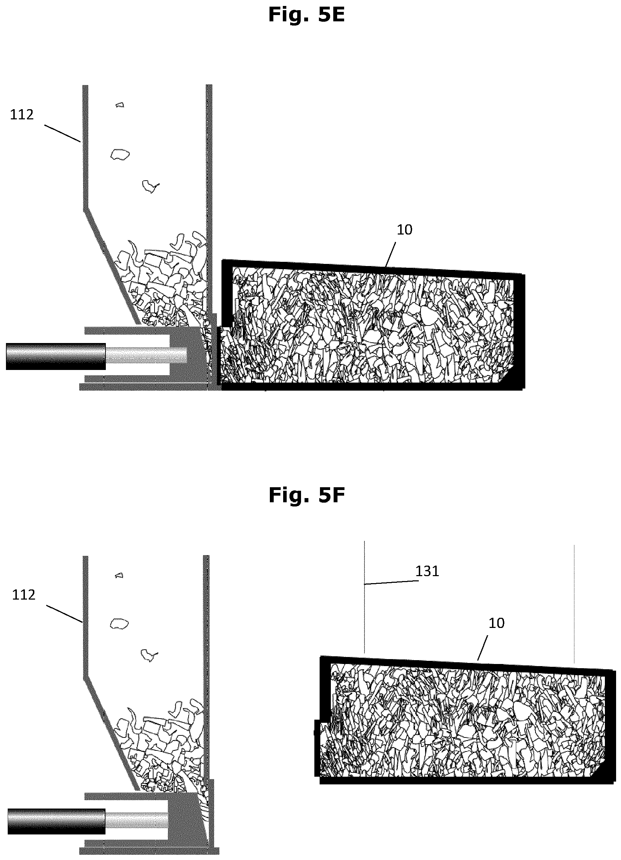

As shown in Fig. 5D, the first container 10 is full, i.e. filled with pieces of the first fraction of a certain amount, volume and/or weight. In Fig. 5E, the door of the first filling unit 112 is closed, and the inlet door of the first container 10 is closed so as to cut off the communication between the inside of the first filling unit 112 and the inside of the first container 10.

As shown in Fig. 5F, the filled first container 10 is picked-up and moved away from the first filling unit 112 by the overhead crane 131.

Subsequently, the method comprises a step of moving the first container 10 to the first intermediate storing position by the overhead crane 131.

Subsequently, the method comprises a step of storing the part of the first fraction in the first container 10 at the first intermediate storing position for any period of time.

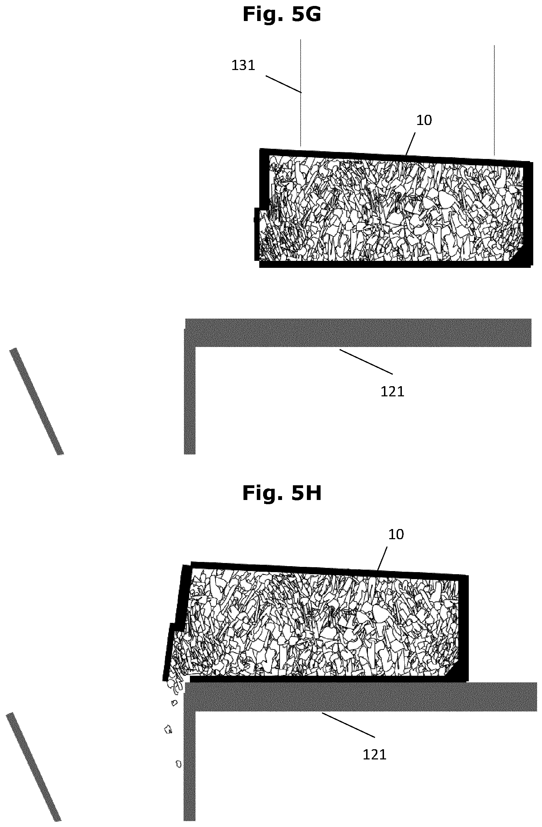

Subsequently, the method comprises a step of moving the first container 10 to the first discharging position by the overhead crane 131 (as shown in Fig. 5G), and a subsequent step of discharging at least a portion of the part of the first fraction from the first container 10 by the first discharging unit 121 (as shown in Fig. 5H). Therein, the outlet door of the first container 10 is opened such that the part of the first fraction stored inside the first container 10 is discharged through the outlet 13 of the first container 10.

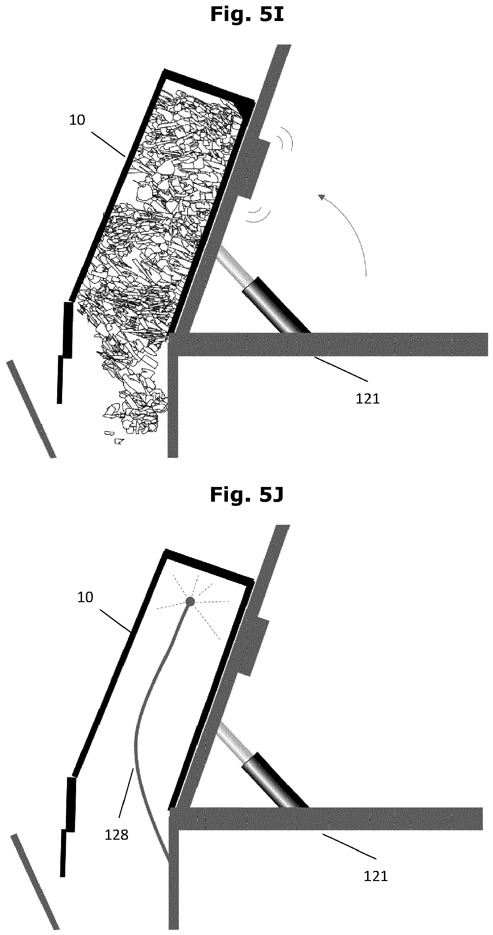

In more detail, Fig. 5I shows the tilting of the first container 10 by the tilting mechanism.

As shown in Fig. 5J, the first discharging unit 121 includes a container cleaning means 128 for cleaning an inside of the first container 10 by a spray nozzle. The inside of the first container 10 is cleaned by spraying water thereto from the container cleaning means 128.

Subsequently, as shown in Fig. 2, the method comprises a step of cleaning the first fraction by the first plastic waste cleaning unit 124, and a subsequent step of thermally processing the first fraction by the first heat-processing unit 126. However, the thermally processing step does not necessarily have to be directly after the cleaning step. There may be a buffering step using a buffer 125 in between the cleaning step and the thermally processing step. As the buffer 125, a separate intermediate storage may be used similarly to the intermediate storage in the container, as described above.

The method steps corresponding to the second fraction, as shown in Fig. 2, are similar to the method steps corresponding to the first fraction, and a redundant description is omitted.

The method further comprises a step of discarding the rejected fraction, as shown in Fig. 2.

### Modifications

Various modifications of the recycling plant 100 and the method are conceivable.

A modification of the embodiment will be explained with respect to Fig. 4. Fig. 4 is a perspective view of a recycling plant 1000 according to a modification of the embodiment.

The basic structure of the recycling plant 1000 according to the modification is the same as the basic structure of the recycling plant 100 according to the embodiment, such that a redundant description will be omitted.

According to the modification, the sorting unit sorts the multi-fractional plastic waste into a first fraction (natural PE), a second fraction (natural PP), a third fraction (white PE), a fourth fraction (white PP), a fifth fraction (mixed PE), and a sixth fraction (mixed PP).

In accordance with the above fractions, the recycling plant 1000 comprises a pre-processing section 1110 including a first filling unit 1111, a second filling unit 1112, a third filling unit 1113, a fourth filling unit (not shown), a fifth filling unit (not shown), and a sixth filling unit (not shown).

In accordance with the above fractions, the recycling plant 1000 uses a plurality of first containers 10, a plurality of second containers 20, a plurality of third containers 30, a plurality of fourth containers (not shown), a plurality of fifth containers (not shown), and a plurality of sixth containers (not shown). The present invention is not limited to using the first to sixth containers. In another configuration, each of the containers is reused for different fractions. Thereby, the number of containers can be kept on a reasonable level.

In accordance with the above containers, a storing section 1130 of the recycling plant 1000 comprises a plurality of first intermediate storing positions, a plurality of second intermediate storing positions, a plurality of third intermediate storing positions, a plurality of fourth intermediate storing positions, a plurality of fifth intermediate storing positions, and a plurality of sixth intermediate storing positions.

Similarly to the embodiment, the storing section 1130 comprises an overhead crane 1131 configured to move the plurality of first to sixth containers 10, 20, 30 within the storing section 1130.

Similarly to the embodiment, a post-processing section 1120 of the recycling plant 1000 according to the modification comprises a first discharging unit 1121 and a second discharging unit 1123. The present invention is not limited to the first and second discharging unit 1121, 1123. In another configuration, only one discharging unit (i.e. the first discharging unit 1121) is used per post-processing line. The two discharging units 1121, 1123 are advantageous for two parallel post-processing lines.

The post-processing section 1120 of the recycling plant 1000 according to the modification further comprises a first heat-processing unit (not shown) that is supplied by the first discharging unit 1121, and a second heat-processing unit (not shown) that is supplied by the second discharging unit 1123.

According to the modification, the recycling plant 1000 comprises a control unit for automatically controlling an operation of the recycling plant 1000.

The control unit is configured to automatically control an operation of the first to sixth filling units 1111, 1112, 1113.

The overhead crane 1131 is automatically controlled by the control unit so as to automatically control the handling of the plurality of containers within the storing section 1130.

The control unit is configured to automatically control an operation of the first and second discharging units 1121, 1123.

The control unit is further configured to automatically control an operation of the first heat-processing unit and the second heat-processing unit so as to be capable of switching between different campaigns. The control unit is further configured to control the washing step(s) upstream the heat-processing step.

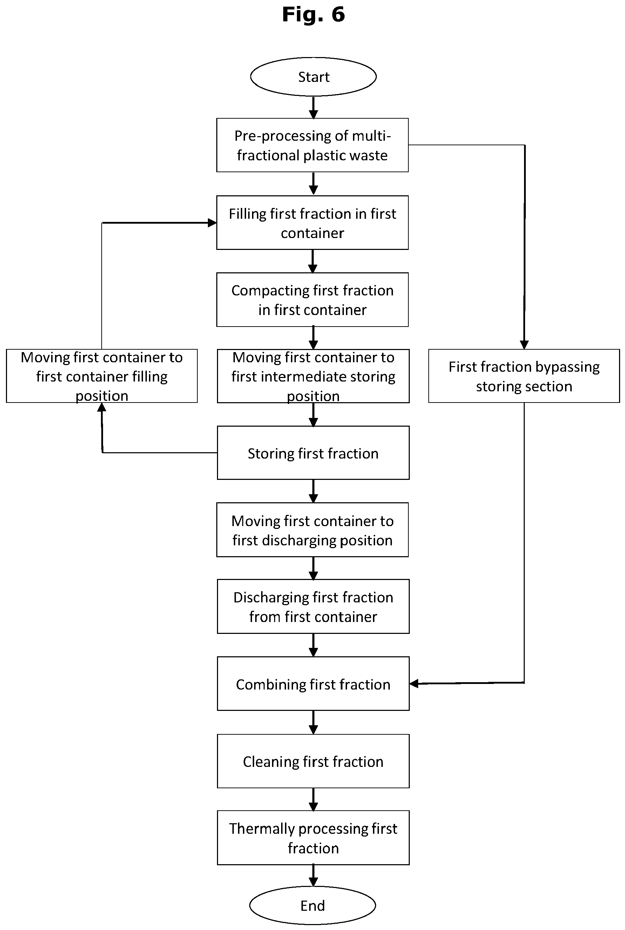

Fig. 6 is a flowchart illustrating a modified method for preparing a fraction of sorted plastic waste according to the modification of the embodiment.

As shown in Fig. 6, the method comprises a step of pre-processing of multi-fractional plastic waste by sorting the plastic waste into a first to seventh fraction by the sorting unit.

For the sake of simplicity, Fig. 6 illustrates the method steps corresponding to the first fraction, but the further method steps for the second to seventh fraction are similar thereto.

Subsequently and similarly to the embodiment, the method comprises a step of filling at least a part of the first fraction in a first container 10 by the first filling unit, and a subsequent step of compacting the part of the first fraction by the processing mechanism of the first container 10.

Subsequently and similarly to the embodiment, the method comprises a step of moving the first container 10 to the first intermediate storing position by the overhead crane.

Subsequently and similarly to the embodiment, the method comprises a step of storing the part of the first fraction in the first container 10 at the first intermediate storing position for any period of time.

Subsequently and differently from the embodiment, the first container 10 is not directly moved to the first or second discharging unit after the storing, but moved again to the first container filling position, as shown in Fig. 6.

Subsequently, the steps of filling at least a part of the first fraction in the first container 10, the compacting of the part of the first fraction, the moving of the first container 10 to the first intermediate storing position, and the storing the part of the first fraction in the first container 10 are repeated for a predetermined number of times, until the first container 10 is full. Alternatively, instead of moving the first container 10 to the intermediate storing position, the first container 10 may also be moved to the filled container waiting position (preferably without the overhead crane 1131), and then moved again to the first container filling position to repeat the filling, until the first container 10 is full. Preferably, the first container 10 is filled in one go, i.e. it is filled until it is full, and then transferred to the intermediate storage. Thereby, the container handling by the overhead crane 1131 can be reduced.

Subsequently, the first container 10 is moved to the first discharging position by the overhead crane, and subsequently at least a portion of the part of the first fraction is discharged from the first container 10 by the first discharging unit.

Subsequently and differently from the embodiment, the method comprises an additional step of bypassing the storing section with the first fraction, as shown in Fig. 6, and an additional step of combining the first fraction supplied from the first discharging unit and the first fraction supplied from the first bypass.

Subsequently and similarly to the embodiment, the method comprises a step of cleaning the first fraction by the first plastic waste cleaning unit, and a subsequent step of thermally processing the first fraction by the first heat-processing unit.

The particular features, structures or characteristics described in the embodiment do not all have to be present in the recycling plant and the method for preparing a fraction of sorted plastic waste, and particular features may be omitted. The previous description is provided to enable any person skilled in the art to practice the various aspects described herein. Various modifications to the embodiment will be readily apparent to those skilled in the art, and the generic principles defined herein may be applied to other aspects.

## Claims

1. A method for preparing a fraction of sorted plastic waste in at least one first container (10), the method comprising
pre-processing of multi-fractional plastic waste by sorting the plastic waste into at least a first fraction and a second fraction according to physical, chemical and/or optical properties of the plastic waste by a sorting unit,
filling at least a part of the first fraction through an inlet (11) of a first container (10) by a first filling unit (112, 1111) at a container filling position,
mono-fractionally storing the part of the first fraction in the first container (10) at an intermediate storing position, and
mono-fractionally post-processing the part of the first fraction by at least one post-processing unit.

2. The method according to claim 1, further comprising
compacting the part of the first fraction by a processing mechanism of the first container (10) or the first filling unit (112, 1111) after the filling.

3. The method according to claim 2, further comprising
filling another part of the first fraction through the inlet (11) of the first container (10) by the first filling unit (112, 1111) after the compacting.

4. The method according to any one of claims 1 to 3, wherein
each first container (10) is filled exclusively with the first fraction by the first filling unit (112, 1111).

5. The method according to any one of claims 1 to 4, further comprising
discharging at least a portion of the part of the first fraction through an outlet (13) of the at least one of the first containers (10) by a first discharging unit (121, 1121) after the storing and before the post-processing.

6. The method according to claim 5, wherein the mono-fractionally post-processing by the at least one post-processing unit includes cleaning the first fraction by a plastic waste cleaning unit and/or thermally processing the first fraction by a heat-processing unit.

7. The method according to any one of claims 1 to 6, further comprising
filling at least a part of the second fraction through an inlet (21) of at least one second container (20) by a second filling unit (113, 1112), and
mono-fractionally storing the part of the second fraction in the second container (20).

8. The method according to claim 7, further comprising
discharging at least a portion of the part of the second fraction through an outlet (23) of the second container (20) by the first discharging unit (121, 1121) or a second discharging unit (123, 1123) after the storing, and
mono-fractionally post-processing the second fraction discharged from the at least one of the second containers (20) by the same or a different post-processing unit after the discharging.

9. The method according to claim 8, wherein the post-processing by the one or more post-processing units are operated campaign-wise by switching between a first campaign of post-processing the first fraction and a second campaign of post-processing the second fraction by the post-processing unit.

10. The method according to any one of claims 5 to 9, wherein the discharging includes tilting the first container (10) around a horizontal axis by a container tilting mechanism and unlocking an outlet door of the first container (10) by a locking/unlocking mechanism to discharge the first fraction through the outlet (13) of the first container (10).

11. The method according to any one of claims 5 to 10, wherein the post-processing includes hot-washing and/or flake purification of the plastic waste and/or compounding and/or deodorizing the plastic waste.

12. The method according to any one of claims 5 to 11, further comprising
combining the part of the first fraction discharged through the outlet (13) of the first container (10) by the first discharging unit (121, 1121) with another part of the first fraction supplied from the sorting unit and having bypassed the first filling unit (112, 1111) and the first discharging unit (121, 1121).

13. The method according to any one of claims 1 to 12, further comprising
after filling the first container (10),
automatically moving the first container (10) from the container filling position to a filled container waiting position, automatically moving another first container (10) to the container filling position, and moving the first container (10) between the filled container waiting position and the intermediate storing position by an overhead crane (131).

14. The method according to any one of claims 1 to 12, further comprising
after filling the first container (10),
automatically moving the first container (10) from the container filling position to the intermediate storing position by an overhead crane (131) while buffering the first fraction supplied from the sorting unit in a chute of the first filling unit (112, 1111), and automatically moving another first container (10) to the container filling position.

15. A recycling plant (100, 1000) comprising
a pre-processing section (110, 1110) including a sorting unit for sorting multi-fractional plastic waste into at least a first fraction and a second fraction according to physical, chemical or optical properties of the plastic waste, and a first filling unit (112, 1111) for filling at least a part of the first fraction into at least one first container (10) at a container filling position,
a storing section (130, 1130) including an intermediate storing position for intermediately storing the first container (10), and
a post-processing section (120, 1120) including at least one post-processing unit for mono-fractionally post-processing the part of the first fraction, wherein
the recycling plant (100, 1000) is configured to carry out the method according to any one of claims 1 to 14.
